# EUROPEAN PATENT SPECIFICATION

(11) **EP 1 494 214 B1**
(45) Date of publication and mention of the grant of the patent: **07.01.2009**
(21) Application number: 04010085.1
(22) Date of filing: 28.04.2004
(51) Int. Cl.: G11B 5/70, G11B 5/706

(54) **Magnetic recording medium**
Magnetisches Aufzeichnungsmittel
Moyen d' enregistrement magnétique

(30) Priority: 30.06.2003 JP 2003188341
(43) Date of publication of application: 05.01.2005
(73) Proprietor: FUJIFILM Corporation, Minato-ku Tokyo (JP)
(72) Inventor: Ishiguro, Tadashi, Odawara-shi Kanagawa (JP)
(74) Representative: HOFFMANN EITLE

(56) References cited:
- WO-A-99/27530
- WO-A1-02/073606
- DE-A- 10 145 379
- US-A1- 2003 091 866

## Description

### 1. FIELD OF THE INVENTION

The present invention relates to a magnetic recording medium.

### 2. DESCRIPTION OF THE RELATED ART

These years, in a magnetic tape a high density recording has progressed and there are some tapes having a capacity of around 100 gigabytes for a backup of a computer. For example in the magnetic tape several hundreds of data tracks are formed in a lateral direction thereof, thereby making high density recording possible. Based upon this, the width of the data tracks become extremely narrow, and also the distance between adjacent data tracks becomes extremely narrow. Therefore, by writing a servo signal in the magnetic tape in advance and servo-controlling the position of a magnetic head (position of the lateral direction of the magnetic tape) with reading the servo signal by the magnetic head, a recording/reproducing element of the magnetic head is made to trace the data tracks (see paragraph 4 in Japanese Patent Laid-Open Publication No. Hei 8-30942).

The servo signal is recorded by applying a recording current to a servo band on a non magnetized magnetic tape so as to magnetize the servo band in one direction.

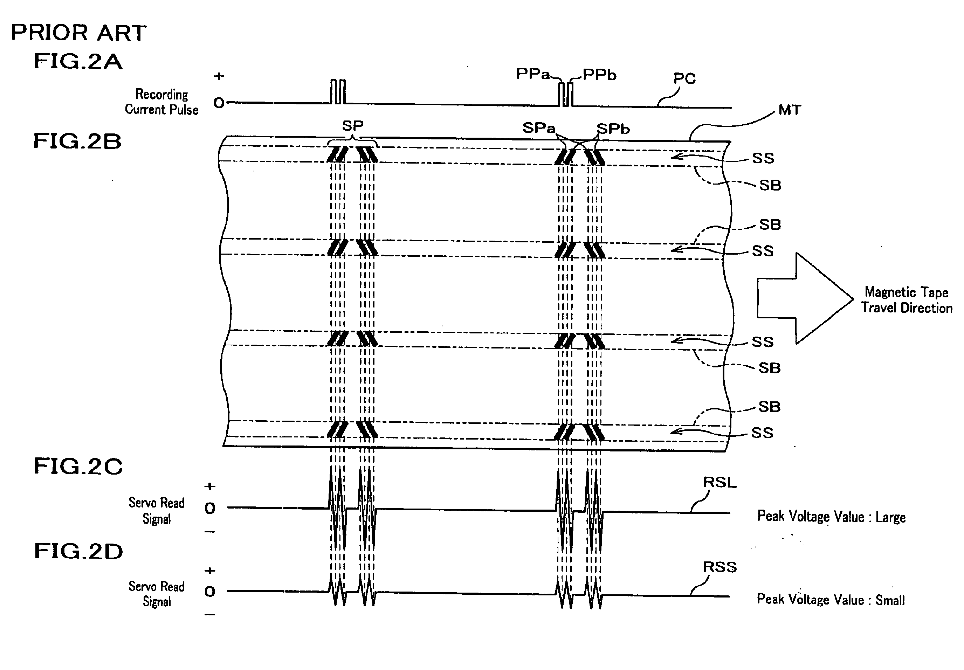

In other words, as shown in FIG. 2B, conventional servo signals SS are formed on non magnetized servo bands SB by flowing a recording current pulse PC consisting of a zero current and a plus pulse current as shown in FIG. 2A in order to avoid a saturation phenomenon of a servo read element (MR (Magneto Resistive) element). If such a recording current pulse PC is used, a magnetic tape MT is not magnetized in areas except for servo patterns SP when the recording current pulse PC is the zero current; and when the plus pulse current of the recording current pulse PC flows, the servo patterns SP are magnetized in one direction, whereby the servo signals SS are written. Meanwhile, since a head gap of a magnetic head (not shown) for writing the servo signals SS has a non-parallel bottom-open-reverse V letter shape having a predetermined angle for a travel direction of the magnetic tape, servo patterns SPa shown in FIG. 2B are magnetized for plus pulse currents PPa shown in FIG. 2A; and furthermore, servo patterns SPb are magnetized for plus pulse currents PPb.

On the other hand, in a magnetic tape recoding/reproducing apparatus a change of a magnetic field of the servo signals SS is detected with a change of an electric resistance by a servo read element, and as a read signal, is output in a differential waveform (voltage value). Therefore, the larger the change of electric resistance of the servo read element, the higher the peak voltage value of the read signal of the servo signals SS, whereby the SN (Signal/Noise) ratio of the read signal is improved. Accordingly, when changes of the servo signals SS themselves are large and when a read area is large due to a wide width of the servo read element, as shown in FIG. 2C the peak voltage value of a read signal RSL of the servo signals SS becomes high.

Hereafter the high density recording of the magnetic recording medium is foreseen to progress till around several tens of terabytes in recording capacity per winding of cartridge. Based upon this, in a case of the magnetic tape the number of data tracks increases, the width of the data tracks and the distance between the adjacent data tracks become narrower, and the magnetic tape itself becomes a thin layer. Thereby the detectable magnetism amount in reading the servo signals SS decreases and the change of magnetization amount of the servo signals SS detectable by the servo read element also becomes small. Accordingly, as shown in FIG. 2D the peak voltage value of a read signal RSS of the servo signals SS becomes small, whereby the SN ratio of the read signal RSS deteriorates. As a result, in the magnetic tape recording/reproducing apparatus the servo signals SS cannot be accurately read, whereby highly accurate position control of the magnetic head cannot be performed.

In addition, since based upon the high density recording, the change of magnetization amount of the data signal recorded on the data band similarly becomes small, the data reproduction output decreases, and furthermore, the SN ratio of the reproduction signal deteriorates.

Consequently, a magnetic recording medium, whose SN ratio of a servo read signal (hereinafter referred to as the SN ratio of the servo signal) is improved, is strongly requested.

In addition, another magnetic recording medium, whose reproduction output is improved in reproducing data recorded in high density and whose SN ratio of the reproduction signal is excellent, is also requested.

US-A1-2003/91866 discloses a magnetic recording medium, wherein the inventive embodiments are characterized by photosensitive layers which record and reproduce servo optical signals.

WO-A-99/27530 relates to a magnetic tape comprising a substrate having on one side thereof a magnetic layer serving as a recording surface and on the other side thereof a resin layer serving as a non-recording surface. The magnetic tape has a region on the side of the non-recording surface along the longitudinal direction of the tape in which a regular pattern for servo tracking having different optical properties is to be formed. This is achieved by irradiating a color-containing non-recording surface of this magnetic tape with laser beams to form a color-changed pattern affording servo signals. The servo signals were detected with light.

DE 101 45 379 discloses a magnetic recording medium comprising on a base film at least two magnetic layers whereof the upper magnetic layer serves for recording data and the lower magnetic layer serves for the recordation of servo signals.

WO-A1-02/073606 discloses a magnetic tape wherein according to Example 1 the magnetic layer is oriented in a magnetic field by arranging N-N opposed magnets at specific positions in relation to the drier and magnetic servo signals are written on the magnetic layer using a servo writer.

### SUMMARY OF THE INVENTION

A magnetic recording medium of a first aspect of the present invention comprises a medium that comprises a base film and a magnetic layer at least containing a hexagonal ferrite magnetic powder and a bonding agent; wherein the magnetic layer has a servo band, where a servo signal for performing

tracking control of a magnetic head is written, and a data band where data is recorded; wherein the servo signal is written on the servo band magnetized in any one direction of longitudinal directions with being magnetized in a reverse direction for the any one direction; and wherein the hexagonal ferrite magnetic powder has average plate diameter of a powder particle 15 nm to 40 nm, average plate thickness 4 nm to 15 nm, and coercivity Hc 140 kA/m to 320 kA/m.

Since in accordance with the magnetic recording medium of the first aspect the servo signal is written on the servo band magnetized in any one direction of the longitudinal directions, for example, in a tape travel direction (this direction is called a "forward direction") in a case of a magnetic tape with being magnetized in the reverse direction for the any one direction, the change rate and change amount of a magnetic field increase at a change portion magnetized in the reverse portion for a base portion of the forward direction when the servo signal is read with a servo read element. Accordingly, the SN ratio of the servo signal can be improved. Meanwhile, the above magnetization method itself is disclosed in the Japanese Patent described before.

In addition, since the hexagonal ferrite magnetic powder, whose average plate diameter of the powder particle is 15 nm to 40 nm, and whose average plate thickness is 4 nm to 15 nm, is used, and furthermore, the coercivity He of the powder is 140 kA/m to 320 kA/m, a stable magnetization is possible. Accordingly, in reproducing data recorded in high density (specifically, data recorded in a line density of not less than 150 kbpi) the reproduction output is improved and a favorable SN ratio of a reproduction signal can be obtained.

In addition, a magnetic recording medium of a second aspect of the present invention is the medium described in the first aspect of the invention,
wherein the magnetic layer is provided on the base film through a non-magnetic layer containing at least a non-magnetic powder and a bonding agent.

Since in accordance with the magnetic recording medium of the second aspect, the non magnetic layer containing at least the non-magnetic powder and the bonding agent is provided at a lower layer of the magnetic layer, the surface roughness of the magnetic layer assumes an appropriate value, whereby the occurrence frequency of servo errors can be suppressed.

In addition, a magnetic recording medium of a third aspect of the present invention is the medium described in any of the first and second aspects, wherein the thickness of the magnetic layer is 10 nm to 200 nm.

Since in accordance with the magnetic recording medium of the third aspect, the thickness of the magnetic layer is 10 nm to 200 nm, a high density recording becomes possible.

In addition, a magnetic recording medium of a fourth aspect of the present invention is the medium described in any of the first to third aspects, wherein the data band is not magnetized.

Although when writing data on a data band, recording can be performed by an overwrite without demagnetizing the data band, in the overwrite the recording is influenced by an originally recorded magnetization. However, since in accordance with the fourth aspect the data band where data is recorded is not magnetized, the recording can be performed in a favorable state in recording the data without being influenced by the originally recorded magnetization.

### BRIEF DESCRIPTION OF THE DRAWINGS

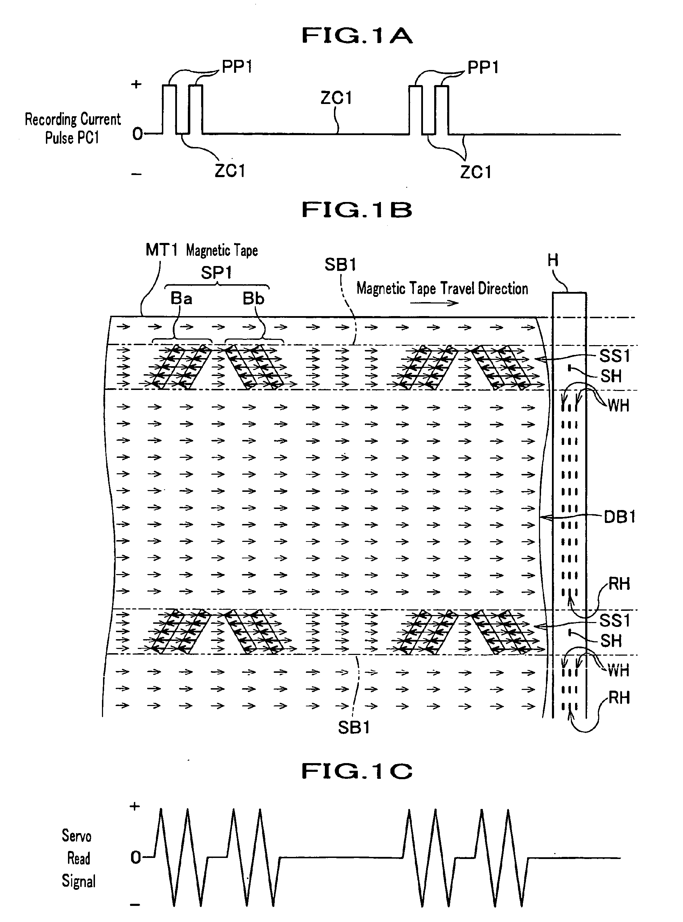

FIGS 1A to 1C are illustration drawings of a magnetic tape (magnetic recording medium) related to an embodiment of the present invention: FIG. 1A is a drawing showing a recording signal used for providing servo bands by writing servo signals; FIG. 1B is an enlarged plan view illustrating a magnetization state of the magnetic tape; and FIG. 1C is a drawing showing a servo signal read from the servo bands of the magnetic tape.

FIGS 2A to 2D are illustration drawings of a magnetic tape having conventional servo signals: FIG. 2A is a drawing showing a recording signal used for providing servo bands by writing servo signals; FIG. 2B is a plan view of the magnetic tape; FIG. 2C is a drawing showing a read signal of the servo signals in a case that a peak voltage value is large; and FIG. 2D is a drawing showing a read signal of the servo signals in a case that the peak voltage value is small.

### DESCRIPTION OF THE PREFERRED EMBODIMENTS

Hereinafter, the embodiments of the present invention will be described, referring to the drawings as needed. The magnetic recording medium of the present invention may be a medium whose recording direction is long compared to an orthogonal direction thereof, and can be applied to magnetic recording media such as a sheet and a tape. In the embodiment the case where the magnetic recording medium of the present invention is a magnetic tape will be described.

First, servo signals are described. The servo signals for use in the present invention are recorded/reproduced by a magnetic recording, and signal patterns (servo patterns) can use arbitrary ones. As examples are cited an amplitude modulation system, a TBS (Timing Based Servo) system for detecting a phase, and the like. FIGS. 1A to 1C are illustrating drawings related to the embodiment of the present invention where the TBS system is adopted: FIG. 1A is a drawing showing a recording signal used for providing servo bands by writing servo signals; FIG. 1B is an enlarged plan view illustrating a magnetization state of the magnetic tape; and FIG. 1C is a drawing showing a servo signal read from the servo bands of the magnetic tape.

As shown in FIG. 1B, on a magnetic tape MT1 are provided a plurality of servo bands SB1 in a lateral direction each of which servo bands SB1 extends in longitudinal directions of the magnetic tape MT1, respectively, and data bands DB1 each of which is positioned between each two of the servo bands SB1. Each of the servo bands SB1 is magnetized in a forward direction of the longitudinal directions of the magnetic tape MT1. In FIG. 1B a magnetization direction is shown by small arrow marks. As shown in FIG. 1A, by flowing a recording current pulse PC1 consisting of a zero current (ZC1) and a plus pulse current (PP1), servo signals SS1 are written with magnetizing the servo bands SB1 in a reverse direction. The servo signals SS1 form each of servo patterns SP1 by a burst Ba that is a magnetization portion like two stripes making a positively slanted angle for a travel direction of the magnetic tape MT1; and a burst Bb that is following the burst Ba and is the magnetization portion like two stripes making a negatively slanted angle for the travel direction. The servo patterns SP1 are repeatedly formed at a predetermined distance in the longitudinal directions, whereby the servo signals SS1 are configured.

Each of the data bands DB1 between each two of the servo bands SB1 is uniformly magnetized in the forward direction. Of course, in the magnetic tape MT1 shown in FIG. 1B, data is not yet recorded, and when the data is recorded, portions magnetized in the reverse direction and the forward direction are formed on the data bands DB1, depending on the data contents.

Meanwhile, although in the embodiment each of the servo patterns SP1 is configured of each two of positively slanted stripes and negatively slanted stripes, it is variable as needed, for example, such as being configured of each five of the positively slanted stripes and the negatively slanted stripes; and being alternately configured of each five of the positively slanted stripes and the negatively slanted stripes and each four of the positively slanted stripes and the negatively slanted stripes. In addition, in FIG. 1A the servo patterns SP1 are exaggeratedly drawn for the magnetic tape MT1 in order to be easily understood.

In FIG. 1B is shown a positional relationship of a magnetic head H for the magnetic tape MT1. In the magnetic head H servo read elements SH for reading the servo signals SS1 are provided parallel in a lateral direction of the magnetic tape MT1 (hereinafter simply referred to as the "lateral direction" at the same distance as that of the plurality of the servo bands SB1. The dimension of a lateral direction of each of the servo read elements SH is set sufficiently smaller than the width of each of the servo bands SB1. Between each two of the servo read elements SH are provided a plurality of recording elements WH ranging in two lines in the lateral direction in order to record signals on the data bands DB1. Furthermore, between the recording elements WH are provided a plurality of reproducing elements RH ranging in one line in the lateral direction.

When for the magnetic tape MT1 thus described, data is recorded/reproduced with the magnetic head H of a magnetic tape drive (not shown), the servo signals SS1 are read with the servo read elements SH. Since the servo patterns SP1 of the servo signals SS1 are slanted for the travel direction (equal to a longitudinal direction) of the magnetic tape MT1 and are formed by respective unparallel stripes, the timing when the servo read elements SH read the servo signals SS1 and detect a pulse differs in accordance with relative positions in the lateral direction of the magnetic tape MT1 and the magnetic head H. Therefore, the recording elements WH or the reproducing elements RH can be accurately positioned onto predetermined tracks of the data bands DB1 by controlling the position of the magnetic head H so that the timing (phase lag) for reading the pulse fulfils a predetermined condition.

The output (peak voltage value) that the servo read elements SH read the servo signals SS1 depends on the change rate or change amount of a change-over between a portion where no signal is recorded and another portion where signals are recorded. In the embodiment a magnetic direction largely varies from the forward direction to the reverse direction at a change portion from the base portion of the servo bands SB1 magnetized in the forward direction to the servo patterns SP1 magnetized in the reverse direction. In addition, the magnetic direction largely varies from the reverse direction to the forward direction also at a change portion from the portion of the servo patterns SP1 magnetized in the reverse direction to the base portion of the servo bands SB1 magnetized in the forward direction. Therefore, depending on the large magnetic change, as shown in FIG. 1C read signals from the servo bands SB1 have large output variations. Accordingly, the SN ratio of the read signals of the servo signals SS1 can be improved.

In addition, the recording of the servo signals SS1 is performed by a first process for magnetizing at least the servo bands SB1 in the forward direction of the longitudinal directions; and a second process for writing the servo signals SS1 on the servo bands SB1 by giving a servo signal recording head (not shown) the recording current pulse PC1 that guides a flux of a single direction for magnetizing the servo bands SB1 in the reverse direction (hereinafter the means for recording servo signals via the first process and the second process are called a reversible magnetization means). Meanwhile, although in the embodiment, as shown in FIG. 1B, the data bands DB1 are uniformly magnetized in the forward direction, they may be demagnetized by providing a demagnetization process. In addition, although in the embodiment the base portion of the servo bands SB1 is magnetized in the forward direction, and the portion of the servo patterns SP1 is magnetized in the reverse direction, the base portion of the servo bands SB1 may be magnetized in the reverse direction, and the portion of the servo patterns SP1 may also be magnetized in the forward direction.

Subsequently, a suitable example with respect to a layer configuration of the magnetic recording medium of the present invention, is a layer configuration that has at least a non-magnetic layer containing a non-magnetic powder and a bonding agent, and furthermore on the non-magnetic layer, a magnetic layer containing at least a hexagonal ferrite magnetic powder and a bonding agent. In addition, in order to improve the running durability of the magnetic recording medium, it may have a back coat layer on a face where the magnetic layer is provided, and on a base film of the opposite face. In addition, in a thickness configuration of the magnetic recording medium the thickness of the base film is preferably 1 µm to 100 µm, more preferably 4 µm to 80 µm; the total thickness of the magnetic layer and the non-magnetic layer is in a range of one hundredth to double of that of the base film; and when the back coat layer is provided, the thickness thereof is 0.1µm to 2 µm, preferably 0.3 µm to 1 µm. In addition, a prime layer for improving adhesiveness may be provided between the base film and the non-magnetic layer. The thickness of the prime layer is preferably 0.01 µm to 2µm, preferably 0.02 µm to 0.5 µm. Meanwhile, as the prime layer, a known one is used. In addition, in the magnetic recording medium layers other than the non-magnetic layer, the magnetic layer, and the back coat layer may be comprised. For example, the magnetic recording medium may have a second magnetic layer, a cushion layer, an overcoat layer, an adhesive layer, and a protection layer. These layers can be provided at appropriate positions so as to effectively exert functions thereof.

The thickness of the magnetic layer for use in the present invention is 10 nm to 200 nm, preferably 30 nm to 180 nm, and more preferably 40 nm to 160 nm. If the magnetic layer is too thin, the output of a servo signal becomes short even if the present invention is applied. On the other hand, if the magnetic layer is too thick, the resolution of a recording signal for writing the servo signal decreases, whereby the SN ratio of the servo signal deteriorates.

The coercivity Hc of the magnetic layer is 140 kA/m to 320 kA/m (1,800 to 4,000Oe), preferably 160 kA/m to 280 kA/m (2,000 to 3,500 Oe), and more preferably 180 kA/m to 240 kA/m (2,200 to 3,000 Oe). If the Hc is too high, the servo signal cannot be recorded; if the Hc is too low, a stable magnetization becomes difficult, whereby the SN ratio of the servo signal deteriorates.

The product (Mrt) of the magnetic layer residual magnetization Mr and the thickness t of the magnetic layer is 5.0 × 10⁻¹⁰ T·m to 7.5 × 10⁻⁸ T·m, preferably 5.0 × 10⁻¹⁰ T·m to 5.0 × 10⁻⁸ T·m, and more preferably 5.0 × 10⁻¹⁰ T·m to 3.0 × 10⁻⁸ T·m. If the Mrt is too high, the noise increases due to a saturation phenomenon of the MR element; if the Mrt is too low, the high density recording property is inferior.

For the magnetic layer of the present invention a hexagonal ferrite magnetic powder is used. A hexagonal ferrite has very high coercivity Hc, and is excellent in chemical stability, anti-corrosion, and anti-friction due to high hardness. Accordingly, the magnetic recording medium, where the hexagonal ferrite magnetic powder is used, matches a need of a decrease of a magnetism spacing based upon a high density, whereby realization of a thinner film, a higher SN ratio and a higher resolution can be expected.

As hexagonal ferrite magnetic powders contained in the magnetic layer of the present invention there are barium ferrite, strontium ferrite, lead ferrite, a calcium ferrite, and various replacement materials, for example, a Co replacement material, and the like. To be more precise, we cite a magnetoplumbite type of barium ferrite and strontium ferrite, a magnetoplumbite type of ferrite whose particle surface is covered with spinel, further a compound magnetoplumbite type of barium ferrite and strontium ferrite that partially contains a spinel phase, and the like; and other than predetermined elements, the following ones may be contained: Al, Si, S, Sc, Ti, V, Cr, Cu, Y, Mo, Rh, Pd, Ag, Sn, Sb, Te, Ba, Ta, W, Re, Au, Hg, Pb, Bi, La, Ce, Pr, Nd, P, Co, Mn, Zn, Ni, Sr, B, Ge, Nb, and the like. Generally, hexagonal ferrite magnetic powders comprising the following compounds can be used: Co-Zn, Co-Ti, Co-Ti-Zr, Co-Ti-Zn, Ni-Ti-Zn, Nb-Zn-Co, Sb-Zn-Co, Nb-Zn, and the like.

The average plate diameter of the hexagonal ferrite magnetic powders for use in the present invention is within the range of 15 nm to 40 nm, preferably 20 nm to 35 nm, and more preferably 20 nm to 30nm. In addition, the average plate thickness of the hexagonal ferrite magnetic powders is 4 nm to 15 nm, preferably 7 nm to 12 nm, more preferably 7 nm to 10 nm. If the average plate diameter of the hexagonal ferrite magnetic powders is smaller than 15 nm, a stable magnetization cannot be obtained due to thermal fluctuations, whereby the output and SN ratio of the reproduction signal deteriorate. On the other hand, if larger than 40 nm, the noise increases, and the SN ratio of the servo signal deteriorates. Furthermore, since each particle is easy to clump, a surface property of the magnetic recording medium is aggravated, whereby the reproduction output decreases.

In addition, if the average plate diameter of the hexagonal ferrite magnetic powders is smaller than 4 nm, sufficient orientation cannot be obtained, whereby the output and SN ratio of the reproduction signal deteriorate. If the average plate diameter is larger than 15 nm, the noise increases due to stacking between particles, whereby the SN ratio of the servo signal decreases, and furthermore, since surface roughing is easy to occur in an orientation, the surface property of the magnetic recording medium is aggravated, whereby the reproduction output decreases.

When the average plate diameter and thickness of the hexagonal ferrite magnetic powders are within the ranges described above, the coercivity Hc does not decrease.

In the hexagonal ferrite magnetic powders, usually the sharper the distributions of the plate diameter and the plate thickness, the more preferable. Although it is difficult to digitalize the plate diameter and thickness of a particle, it is possible to make a comparison by randomly measuring 500 particles through TEM (Transmission Electron Microscope) photos. In order to make the distributions of the plate diameter and the plate thickness sharp, it suffices to make a particle generation reaction system uniform as much as possible and to dispense a known distribution improvement treatment for generation particles.

The coercivity Hc of the hexagonal ferrite magnetic powders is 140 kA/m to 320 kA/m (1,800 to 4,000 Oe), preferably 160 kA/m to 280 kA/m (2,000 to 3,500 Oe),and more preferably 180 kA/m to 240 kA/m (2,200 to 3,000 Oe). The Hc can be controlled by particle sizes (plate diameter and plate thickness), kinds and amounts of contained elements, element replacement sites, and particle generation reaction conditions, and the like.

In addition, the saturation magnetization amount σs of the hexagonal ferrite magnetic powders is 40 A·m²/kg to 100 A·m²/kg. Although the saturation magnetization amount σs is preferably high it tends to become smaller as a particle becomes minute.

As bonding agents for use in the magnetic layer of the present invention, known ones can be used. For example, a vinyl chloride copolymer, a polyurethane resin, an acryl resin, and the like, and mixtures thereof are cited. In addition, the numerical average molecular weight of these resins is up to 100,000, preferably up to 80,000. Meanwhile, it is preferable to introduce polarity groups into these resins in order to improve the dispersion property of magnetic powders. As the polarity groups, "-COOM,""-SO₃M," and "-P=O(OM)₂ (M: hydrogen atom or alkali metal)" are known.

Furthermore, in the magnetic layer a polishing agent, a carbon black, a lubricant, and the like can be contained as needed. When the polishing agent is contained, the average particle size thereof is preferably 10 nm to 300 nm and not more than double the thickness of the magnetic layer.

As a non-magnetic layer for use in the present invention, a layer at least containing a non-magnetic powder and a bonding agent is preferable. As the non-magnetic powder, known ones can be used and TiO₂, Fe₂O₃, Al₂O₃, CeO₂, ZrO₂, BaSO₄, ZnO, a carbon black, a graphite, and the like are cited. In addition, when using a resin where the polarity groups are introduced as the bonding agent, a metal oxide is excellent in the dispersion property. The particle size (in a case of an acicular shape: longer axis length) of these non-magnetic powders is 10 nm to 300 nm, preferably 30 nm to 200 nm, and the shape thereof may be any of a grit shape, an acicular shape, and a cubic shape. In addition, plural kinds of the non-magnetic powders may be used as needed. For example, it is possible to mix a non-magnetic oxide, a carbon black, and the like in order to impart conductivity. In addition, as the bonding agent for use in the non-magnetic layer, the same as in the magnetic layer are used. Furthermore, in the non-magnetic layer an antistatic agent, a lubricant, and the like can be contained as needed.

As base films for use in the present invention, known ones such as polyesters such as a polyethylene terephthalate and a polyethylene naphthalate, polyolefins, a cellulose triacetate, a polycarbonate, a polyamide (aromatic polyamide in particular preference), a polyimide, a polysulfon, and aramids can be used. For these base films a corona discharge treatment, a plasma treatment, an easy adhesion treatment, a dust removal treatment, and the like may also be performed in advance. In order to achieve purposes of the present invention, it is requested to use a base film whose center line average roughness Ra (cut-off value: 0.25 mm) is not more than 0.03 µm, preferably not more than 0.02 µm, and more preferably 0.01 µm. In addition, the base film has preferably not only low center line average roughness Ra but also no rough and large protrusions not less than 1 micron. The shape of a surface roughness can be freely controlled by the size and amount of a filler added to the base film.

The F-5 value (stress at 5 % elongation) of a longitudinal direction of the base film is preferably 5 kg/mm² to 50 kg/mm²; that of a lateral direction of the base film is preferably 3 kg/mm² to 30 kg/mm²; and the F-5 value of the longitudinal direction is generally higher than that of the lateral direction. However, when it is requested to increase strength particularly in the lateral direction, it is not always limited to the above. In addition, thermal contraction factors of the longitudinal direction and lateral direction of the base film at 100 degrees Celsius for 30 minutes are preferably not more than 3 percent, more preferably not more than 1.5 percent; and the thermal contraction factors at 80 degrees Celsius for 30 minutes are preferably not more than 1 percent, more preferably not more than 0.5 percent. The breakage strength of the base film is preferably 5 kg/mm² to 100 kg/mm² in both of the longitudinal direction and the lateral direction; and the elastic modulus thereof is preferably 100 kg/mm² to 2,000 kg/mm² in both of the longitudinal direction and the lateral direction.

Although as back coat layers for use in the present invention, known ones can be used, a carbon black and inorganic powders are preferably contained in order to improve the running durability. In addition, in the back coat layers a lubricant and the like can be contained as needed.

### [Manufacturing Method]

Describing a suitable example with respect to a manufacturing method of the magnetic recording medium of the present invention, is preferable the method having at least: an adjustment process for adjusting coating liquid for a magnetic layer, a coating process for coating the coating liquid for the magnetic layer on a base film, an orientation process for orienting a magnetic substance by a rare earth metal magnet and the like, a drying process, a calendar process for heightening surface smoothness by rolls, a slitting process, and a recording process for recording servo signals. In addition, when providing any of a non-magnetic layer and a back coat layer, another adjustment process and coating process for each coating liquid are added. Here will be described the manufacturing method of the magnetic recording medium of the present invention where the non-magnetic layer and the back coat layer are provided. The manufacturing method of the magnetic recording medium of the present invention is not limited to methods discussed below.

The adjustment process of the coating liquid for the magnetic layer and the non-magnetic layer comprises at least a kneading process and a dispersion process. In addition, mixing processes may be provided before/after these processes as needed, and furthermore, individual processes may be separated into more than one step, respectively. All materials such as a hexagonal ferrite magnetic powder, a non-magnetic powder, a bonding agent, a carbon black, a polishing agent, an antistatic agent, a lubricant, and a solvent may be added at start or on the way of any process. In addition, individual materials may be added in more than one bacht. For example, a polyurethane resin may be batchwise added in the kneading process, the dispersion process, and the mixing process for adjusting viscosity after dispersion.

As a coating process for coating the coating liquid on a base film, known methods can be used. For example, the following known methods are cited:
(1) A method for coating the coating liquid for the magnetic layer, wherein first, the coating liquid for the non-magnetic layer is coated by gravure coating, roll coating, blade coating, extrusion coating equipment, and the like, and while the non-magnetic layer is wet, the coating liquid for the magnetic layer is coated by base film pressurizing extrusion coating equipment disclosed in Japanese Patent Publication No. Hei 1-46186, and Japanese Patent Laid-Open Publication No. Sho 60-238179 and Hei 2-265672.
(2) A method for nearly simultaneously coating the coating liquid for the magnetic layer and the non-magnetic layer by one coating head, where two coating liquid passing slits are built in, such as disclosed in Japanese Patent Laid-Open Publication No. Sho 63-88080, Hei 2-17971, and Hei 2-265672.
(3) A method for nearly simultaneously coating the coating liquid for the magnetic layer and the non-magnetic layer by base film pressurizing extrusion coating equipment with a backup roll disclosed in Japanese Patent Publication No. Hei 2-174965.

In addition, in order to prevent the electromagnetic conversion property of the magnetic recording medium from decreasing due to a clump of magnetic powder particles, it is preferable to provide shearing to the coating liquid inside a coating head by methods such as disclosed in Japanese Patent Laid-Open Publication No. Sho 62-95174 and Hei 1-236968. Furthermore, if the viscosity of the coating liquid satisfies the numerical value range disclosed in Japanese Patent Laid-Open Publication No. Hei 3-8471, the clump of the magnetic powder particles can be further prevented.

In the orientation process for orienting the magnetic substance, for example, known methods such as a method for performing random orientations with diagonally alternately arranging rare earth metal magnets and another method for performing the random orientations with applying an alternating current magnetic field by a solenoid are usable. However, since a strong orientation is necessary, in order to obtain the magnetic recording medium of the present invention, it is preferable to use an orientation method by rare earth metal magnets not less than 0.2 T and another orientation method by a solenoid not less than 0.1 T in combination. Furthermore, in order to improve the orientation property, it is preferable to provide a reasonable drying process in advance before the orientation.

The coating of the coating liquid for the back coat layer is preferably performed via the drying process after the orientation process. Meanwhile, as an adjustment method and a coating method of the coating liquid for the back coat layer, known methods can be used.

The calendar process for increasing surface smoothness by rollers is preferably performed between a plastic roll and a metal roll, or between two metal rolls. As plastic rolls for use in the calendar process, heat resistant ones such as epoxy, polyimide, polyamide, polyimideamide are cited.

The calendar treatment temperature is preferably not less than 70 degrees Celsius, more preferably not less than 80 degrees Celsius. The roll line pressure is preferably not less than 200 kg/cm, more preferably not less than 300 kg/cm.

### [Physical Properties]

In the magnetic recording medium of the present invention the surface resistivity of the magnetic layer is preferably 1 x 10⁴ ohm/sq to 1 × 10¹² ohm/sq; the elastic modulus in 0. 5 percent elongation thereof is preferably 100 kg/mm² to 2,000 kg/mm² in both of a travel direction and a lateral direction; the breakage strength thereof is preferably 1 kg/cm² to 30 kg/cm²; and the glass transition temperature thereof (maximum point of a loss elastic modulus measured at 110 Hz) is preferably 50 to 120 degrees Celsius, that of the non-magnetic layer is 0 to 100 degrees Celsius. The loss elastic modulus of the magnetic layer is preferably within a range of 1 × 10⁷ Pa to 8 × 10⁸ Pa, the loss tangent thereof is preferably not more than 0.2. If the loss tangent is too large, an adhesion accident can easily occur during running of the magnetic recording medium.

The elastic modulus of the magnetic recording medium of the present invention is preferably 100 kg/mm² to 1,500 kg/mm² in both of a travel direction and a lateral direction thereof; the residual elongation thereof is preferably not more than 0.5 percent; and at a temperature of not more than 100 degrees Celsius, the heat shrinkage factor is preferably not more than 1 percent, more preferably not more than 0.5 percent, and most preferably not more than 0.1 percent. Friction coefficients of the magnetic layer face and the opposite face (any of a base film and a back coat layer) of the magnetic recording medium for a stainless steel sheet (SUS (Steel Use Stainless) 420J) are preferably not more than 0.5, and more preferably not more than 0.3.

The residual solvent contained in the magnetic layer is preferably 100 mg/m², and more preferably 10 mg/m². The void ratio is preferably not more than 30 volume percent, and more preferably 20 volume percent. Although the void ratio is preferably smaller in order to realize a high output, in some cases a predetermined value may be ensured, depending on the purpose if any. For example, in the magnetic recording medium where an emphasis is put on repetitive uses, there are many cases that the larger the void ratio the better the running durability.

In the magnetic recording medium of the present invention the non-magnetic layer and the magnetic layer may have different physical properties, respectively, depending on the purpose. For example, if increasing the elastic modulus of the magnetic layer high, thereby improving the running durability, and simultaneously making the elastic modulus of the non-magnetic layer lower than that of the magnetic layer, the head contact (adhesion degree of the magnetic recording medium and a head) of the magnetic recording medium can be improved. In addition, when using more than one layer, physical properties thereof may be different, respectively. For example, as described in Japanese Patent Laid-Open Publication Sho 58-56228, the reproduction output is improved by making the Hc of an upper magnetic layer higher than that of a lower magnetic layer.

### [Examples]

Here the present invention will be more precisely described in accordance with examples. In addition, a unit, "AW," in the examples means an amount by weight.

### (a) Making of Magnetic Recording Medium

Coating liquid compositions for a magnetic layer and the adjustment method used in the examples and comparison examples are as follows: The an average particle plate diameter and thickness of powder particles of a used hexagonal ferrite (barium ferrite) powder are as Table 1, and the coercivity Hc of the magnetic powder is adjusted as shown in Table 1.

| | |
|---|---|
| Hexagonal ferrite (barium ferrite) powder | 100 AW |
| Molecular compositions for Ba: Fe, 9; Co, 0.2; and Zn, 0.8 Specific surface area by the BET method: 50 m²/g Saturation magnetization amount σ s: 58 A·m²/kg | |
| Vinyl chloride copolymer: | 10 AW |
| MR110 (manufactured by ZEON Corporation) | |
| Polyurethane resin | 6 AW |
| UR8200 (manufactured by TOYOBO Company Limited) | |
| α -Al₂O₃ | 15 AW |
| Mohs hardness: 9 | |
| Carbon black | 0.5 AW |
| Average particle diameter: 0.08 µm | |
| Butyl stearate | 1 AW |
| Stearic acid | 5 AW |
| Methyl ethyl ketone | 90 AW |
| Cyclohexanone | 30 AW |
| Toluene | 60 AW |

After kneading each composition with an open kneader, it was dispersed using a sand mill. A polyisocyanate (Coronate L manufactured by NIPPON POLYURETHANE INDUSTRY CO., LTD) of 5 AW was added to the obtained dispersion liquid. Then, after further adding a mixture solvent of methyl ethyl ketone and cyclohexanone at 40 AW filtration by using a filter having an average pore diameter of 1 µm, a coating liquid for the magnetic layer was obtained.

Next, compositions of coating liquid for the non-magnetic layer used in the examples and the comparison example are as follows: the adjustment method thereof is the same as that of the coating liquid for the magnetic layer.

| | |
|---|---|
| Non-magnetic layer (α-Fe₂O3) Average long axis length: 0.1 µm | 80 AW |
| Specific surface area by the BET method: 52 m²/g | |
| pH: 6 | |
| Tap density: 0.8 | |
| DBP oil absorption amount: 27 to 38 ml/100 g | |
| Carbon black | 20 Aw |
| Average primary particle diameter: 16 nm | |
| DBP oil absorption amount: 80 ml/100 g | |
| pH: 8 | |
| Specific surface area by the BET method: 250 m²/g | |
| Volatile matter content: 1.5 % | |
| Vinyl chloride copolymer | 12 Aw |
| MR110 (manufactured by ZEON Corporation) | |
| Polyester urethane resin A | 5 Aw |
| α -Al₂O₃ (average particle diameter: 0.2 µm) dispersion liquid | 5 AW |
| Butyl stearate | 1 Aw |
| Stearic acid | 1 Aw |
| Methyl ethyl ketone | 100 Aw |
| Cyclohexanone | 50 AW |
| Toluene | 50 AW |

Next, compositions of coating liquid for the back coat layer used in the examples and the comparison examples are as follows:
1) Mixture A

| | |
|---|---|
| Carbon black | 100 AW |
| BP-800 (manufactured by Cabot Corporation) | |
| Nitrocellulose | 100 AW |
| RS 1/2 | |
| Polyurethane | 30 AW |
| N2301 (manufactured by NIPPON POLYURETHANE INDUSTRY CO., LTD) | |
| Oleic acid copper (dispersant) | 5 AW |
| Copper phthalocyanine (dispersant) | 5 AW |
| Precipitable sulfuric barium (dispersant) | 5 AW |
| Methyl ethyl ketone | 500 AW |
| Toluene | 500 AW |

2) Mixture B

| | |
|---|---|
| Carbon black | 100 AW |
| SSA: 8.5 m²/g | |
| Average particle diameter: 270 nm | |
| DBP oil absorption amount: 36 ml/100 g | |
| pH: 10 | |
| Nitrocellulose | 100 AW |
| Polyurethane | 30 AW |
| N2301 (manufactured by NIPPON POLYURETHANE INDUSTRY CO., LTD) | |
| Methyl ethyl ketone | 300 AW |
| Toluene | 300 AW |

The mixture A was kneaded with a roll mill, the mixture A and the mixture B were dispersed with a sand grinder, and the compositions below were added to the obtained dispersion liquid at 100 AW.

| | |
|---|---|
| Polyester resin | 5 AW |
| Vylon 300 (TOYOBO Company Limited) | |
| Polyisocyanate | 5 AW |
| Coronate L (manufactured by NIPPON POLYURETHANE INDUSTRY CO., LTD) | |

Subsequently, the coating amounts of the coating liquid for the magnetic layer and the non-magnetic layer were adjusted so that the thickness of the non-magnetic layer after drying was 1 µm, and furthermore, the thickness of the magnetic layer provided on the non-magnetic layer was 150 nm, and then simultaneously coated on a base film in double layers. As the base film, is used a polyethylene terephthalate film whose thickness and center line average roughness Ra are 6 µm and 0.001 µm, respectively, and where a hydrophilic treatment is dispensed on the surface thereof in advance. While the magnetic layer and the non-magnetic layer were wet, orientation was performed by a rare earth metal magnet of 0.5 T and a solenoid of 0.4 T, and the coating liquid for the back coat layer on a face where the magnetic layer and the non-magnetic layer were provided and on the base film of the opposite face was coated so that the thickness after drying was 0.3 µm, and then dried.

Furthermore, a treatment was performed with a 7-high calendar configured exclusively of metal rolls at a temperature of 100 degrees Celsius, at a speed of 100 mpm (200mpm for example 1, comparison example 1, comparison example 6, and comparison example 7), and slit into a width of 1,25 cm (half inch). A magnetic tape for an LTO-2 was produced by writing a servo signal of an LTO Ultrium 2 format using a servo writer by the reversible magnetization means described above. Only for the comparison example 1, the servo signal was writter on a not magnetized servo band (single directional magnetization).

### (b) Evaluation Method

The obtained magnetic tapes were evaluated in accordance with an evaluation method described below, and the results are shown in Table 1.

### 1) Coercivity Hc

Apply magnetic field of maximum 796 kA/m (10 kOe) to small piece of the magnetic tape using a vibration specimen flux meter (manufactured by TOEI INDUSTRY CO., LTD), and measure the coercivity Hc of the magnetic layer.

### 2) Average Plate Diameter and Average Plate Thickness of Hexagonal Ferrite (Barium Ferrite) Powder

Measure 500 particles at random through TEM photos of particles, and calculate the average particle diameter and thickness thereof.

### 3) Output of Servo Signal

When writing a servo signal by a servo writer, read the servo signal from the magnetic tape by a read head provided at a running system after the read head, and measure the output of the servo signal that is read, using an oscilloscope.

### 4) Error Rate

Modulate a signal whose surface density is 150 kbpi by an 8-10 conversion, record it on the magnetic tape by a PRI equivalent system, and measure it using a drive for the LTO-2 (manufactured by IBM Corporation). Then, in case that the error rate is not more than 2.5 × 10⁻⁵, it is assumed that the occurrence frequency of a servo error is less, whereby the SN ratio of the servo signal is superior and is judged "× ;" in case that the error rate is more than 2.5 × 10⁻⁵, it is assumed that the occurrence frequency of the servo error is more, whereby the SN ratio of the servo signal is inferior and is judged NG."

### 5) Output and SN ratio of Reproduction Signal

Measure a magnetic tape recorded same as in item 4) by the same apparatus as in item 4). The output and SN ratio of a reproduction signal of a commercial LTO Ultrium 2 data cartridge (manufactured by FUJI PHOTO FILM CO., LTD) are made a basis (each 0 dB).

**Table 1**

| | Write method of servo signal | Powder particle size of hexagonal ferrite magnetic powder (nm) | | Coercivity Hc of magnetic layer (kA/m) | Output of servo signal (mV) | Output of reproduction signal (dB) | SN ratio of reproduction signal (dB) | Error rate | |
|---|---|---|---|---|---|---|---|---|---|
| | | Average plate diameter | Average plate thickness | | | | | Value | Evaluation |
| Example 1 | Reverse. magnetization | 25 | 8 | 183 | 27 | 1.5 | 1.8 | 2×10⁻⁸ | × |
| Example 2 | Reverse. magnetization | 25 | 8 | 143 | 30 | 2.1 | 2.8 | 3×10⁻⁸ | × |
| Example 3 | Reverse magnetization | 25 | 8 | 318 | 25 | 1.8 | 1.6 | 8×10⁻⁷ | × |
| Example 4 | Reverse magnetization | 15 | 10 | 183 | 20 | 1.9 | 1.8 | 9×10⁻⁷ | × |
| Example 5 | Reverse magnetization | 40 | 10 | 183 | 23 | 2.3 | 2.1 | 3×10⁻⁸ | × |
| Example 6 | Reverse. magnetization | 25 | 4 | 183 | 20 | 2 | 1.7 | 6×10⁻⁷ | × |
| Example 7 | Reverse magnetization | 25 | 15 | 183 | 35 | 1.6 | 1.8 | 8×10⁻⁷ | × |
| Comparison example 1 | Single directional magnetization | 25 | 8 | 170 | 5 | 1.6 | 2 | 8×10⁻³ | NG |
| Comparison example 2 | Reversible magnetization | 10 | 6 | 183 | 28 | -1.5 | -1.9 | 5×10⁻⁴ | NG |
| Comparison example 3 | Reversible magnetization | 50 | 10 | 183 | 27 | -1 | -0.9 | 6×10⁻⁵ | NG |
| Comparison example 4 | Reversible magnetization | 25 | 3 | 198 | 20 | -1.8 | -2.1 | 2×10⁻⁴ | NG |
| Comparison example 5 | Reversible magnetization | 25 | 19 | 210 | 18 | -2 | -2.8 | 1×10⁻³ | NG |
| Comparison example 6 | Reversible magnetization | 20 | 9 | 120 | 19 | -3.5 | -3 | 4×10⁻² | NG |
| Comparison example 7 | Reversible magnetization | 25 | 19 | 350 | 18 | 1 | -0.6 | 3×10⁻³ | NG |

In accordance with Table 1 for the examples 1 to 7 within a condition range regulated by the first aspect of the present invention, the output and SN ratio of the reproduction signal show favorable values ( all plus values), and furthermore, all error rates show favorable evaluations "×."

On the other hand, for the comparison example 1 the servo signal is written by the single directional magnetization, so it does not satisfy the condition range regulated by the first aspect of the present invention. Accordingly, the error rate deteriorates ("NG") and a favorable SN ratio of the servo signal cannot be obtained.

In addition, for each of the comparison examples 2 and 3 out of the comparison examples 2 to 5 each average plate diameter of powder particles is deviated out of lower and upper limit values of the condition range regulated by the first aspect; for each of the comparison examples 4 and 5 each average plate thickness of powder particles is deviated out of lower and upper limit values of the condition range regulated by the first aspect. Therefore, for any of the comparison examples 2 to 5 each output and SN ratio of the reproduction signal shows minus values, and are inferior compared to those of the examples 1 to 7. Furthermore, each error rate of the comparison examples 2 to 5 is also inferior ("NG"), and a favorable SN ratio of the servo signal cannot be obtained.

In addition, for the comparison example 6 the coercivity Hc of the magnetic layer is less than the lower limit value of the condition range regulated by the first aspect; and for the comparison example 7 that of the magnetic layer is more than the upper limit value thereof. Furthermore, for the comparison example 7 the average plate ratio of powder particles is more than the upper limit value of the condition range regulated by the first aspect. Therefore, for each of the comparison examples 6 and 7 each error rate deteriorates ("NG") and a favorable SN ratio of the servo signal cannot be obtained.

## Claims

1. A magnetic recording medium comprising:
a base film; and
a magnetic layer containing at least a hexagonal ferrite magnetic powder and a bonding agent and having a thickness of 10 nm to 200 nm;
wherein said magnetic layer has a servo band, where a servo signal for performing tracking control of a magnetic head is written, and a data band where data is recorded;
wherein said servo band is magnetized in any one direction of longitudinal directions and said servo signal is written on said servo band in a magnetization direction that is reverse to said magnetization direction of said servo band; and
wherein said hexagonal ferrite magnetic powder has an average plate diameter of a powder particle of 15 nm to 40 nm, an average plate thickness of 4 nm to 15 nm, and a coercivity Hc of 140 kA/m to 320 kA/m.

2. A magnetic recording medium according to claim 1, wherein said magnetic layer is provided on said base film through a non-magnetic layer at least containing a non-magnetic powder and a bonding agent.

3. A magnetic recording medium according to claim 1 or 2 wherein said data band is not magnetized.

4. A magnetic recording medium according to claim 1, wherein said data band is not magnetized.

5. A magnetic recording medium according to claim 1, wherein a product of a residual magnetization and thickness of said magnetic layer is 5 × 10⁻¹⁰ T·m to 7.5 × 10⁻⁸ T.m.

6. A magnetic recording medium according to claim 1, wherein a saturation magnetization amount of said hexagonal ferrite magnetic powder is 40 A·m²/kg to100 A·m²/kg.

7. A magnetic recording medium according to claim 1, wherein a numerical average molecular weight of resins of a bonding agent for use in said hexagonal ferrite magnetic powder is up to 100,000.

8. A magnetic recording medium according to claim 1, wherein a center line average roughness Ra of said base film is not more than 0.03 µm and said base film does not have protrusions of at least 1µm.

9. A magnetic recording medium according to claim 1, wherein the stream in 5% elongation (F-5 value) in a longitudinal direction of a base film is 5 kg/mm² to 50 kg/mm².

10. A magnetic recording medium according to claim 1, wherein thermal contraction factors of a longitudinal direction and lateral direction of a base film at 100 degrees Celsius for 30 minutes are not more than 3 percent

11. A magnetic recording medium according to claim 1, wherein a breakage strength of a base film is 5 kg/mm² to 100 kg/mm² in both of a longitudinal direction and a lateral direction thereof, and an elastic modulus of said base film is 100 kg/mm² to 2,000 kg/mm² in both of the longitudinal direction and the lateral direction.

12. A magnetic recording medium according to claim 2, wherein a surface resistivity of said magnetic layer is 1 x 10⁴ ohm/sq to 1 × 10¹² ohm/sq; an elastic modulus at 5 percent elongation of said magnetic layer is 100 kg/mm² to 2,000 kg/mm² in both of a travel direction and a lateral direction; a breakage strength of said magnetic layer is 1 kg/cm² to 30 kg/cm²; and a glass transition temperature of said magnetic layer is 50 to 120 degrees Celsius, and a glass transition temperature of a non-magnetic layer is 0 to 100 degrees Celsius.

13. A magnetic recording medium according to claim 1, wherein a loss elastic modulus of said magnetic layer is within a range of 1 × 10⁷ Pa to 1 × 10⁸ Pa and a loss tangent of said magnetic layer is not more than 0.2.

14. A magnetic recording medium according to claim 1, wherein the elastic modulus of the magnetic according medium is 100 kg/mm² to 1,500 kg/mm² in both of a travel direction and a lateral direction, a residual elongation is not more than 0.5 percent, and a thermal shrinkage factor at all temperatures of not more than 100 degrees Celsius is not more than 1 percent.

15. A magnetic recording medium according to claim 1, wherein friction coefficients of the magnetic layer face and the opposite face for a stainless steel sheet are not more than 0.5.

16. A magnetic recording medium according to claim 2, wherein a residual solvent contained in said magnetic layer is not more than 100 mg/m2 and a void ratio is not more than 30 volume percent in both the non-magnetic layer and said magnetic layer.

## Patentansprüche

1. Magnetisches Aufzeichnungsmedium, umfassend:
einen Basisfilm und
eine Magnetschicht, die mindestens ein magnetisches hexagonales Ferritpulver und ein Bindemittel enthält und eine Dicke von 10 bis 200 nm hat,
wobei die Magnetschicht ein Servoband, wo ein Servosignal zur Spursteuerung eines Magnetkopfes geschrieben ist, und ein Datenband, wo Daten aufgezeichnet werden, hat;
wobei das Servoband in einer beliebigen Richtung von Längsrichtungen magnetisiert ist und das Servosignal auf das Servoband in einer Magnetisierungsrichtung geschrieben ist, die entgegengesetzt ist zu der Magnetisierungsrichtung des Servobandes; und
wobei das magnetische hexagonale Ferritpulver einen mittleren Plattendurchmesser eines Pulverpartikels von 15 bis 40 nm, eine mittlere Plattendicke von 4 bis 15 nm und eine Koerzitivfeldstärke Hc von 140 bis 320 kA/m hat.

2. Magnetisches Aufzeichnungsmedium gemäß Anspruch 1, in dem die Magnetschicht über eine nicht-magnetische Schicht, die mindestens ein nicht-magnetisches Pulver und ein Bindemittel enthält, auf dem Basisfilm aufgebracht ist.

3. Magnetisches Aufzeichnungsmedium gemäß Anspruch 1 oder 2, in dem das Datenband nicht magnetisiert ist.

4. Magnetisches Aufzeichnungsmedium gemäß Anspruch 1, in dem das Datenband nicht magnetisiert ist.

5. Magnetisches Aufzeichnungsmedium gemäß Anspruch 1, in dem das Produkt der Restmagnetisierung und der Dicke der Magnetschicht 5 x 10⁻¹⁰ bis 7,5 x 10⁻⁸ T·m ist.

6. Magnetisches Aufzeichnungsmedium gemäß Anspruch 1, in dem die Sättigungsmagnetisierungsmenge des magnetischen hexagonalen Ferritpulvers 40 bis 100 A·m²/kg ist.

7. Magnetisches Aufzeichnungsmedium gemäß Anspruch 1, in dem das zahlenmittlere Molekulargewicht von Harzen eines Bindemittels für die Verwendung in dem magnetischen hexagonalen Ferritpulver bis zu 100.000 ist.

8. Magnetisches Aufzeichnungsmedium gemäß Anspruch 1, in dem die durchschnittliche Mittellinienrauhigkeit Ra des Basisfilms nicht mehr als 0,03 µm ist und der Basisfilm keine Vorsprünge von mindestens 1 µm hat.

9. Magnetisches Aufzeichnungsmedium gemäß Anspruch 1, in dem die Spannung bei 5 % Dehnung (F-5 Wert) in einer Längsrichtung des Basisfilms 5 bis 50 kg/mm² ist.

10. Magnetisches Aufzeichnungsmedium gemäß Anspruch 1, in dem thermische Kontraktionsfaktoren einer Längsrichtung und Querrichtung des Basisfilms bei 100°C für 30 Minuten nicht mehr als 3 % sind.

11. Magnetisches Aufzeichnungsmedium gemäß Anspruch 1, in dem die Bruchfestigkeit des Basisfilms 5 bis 100 kg/mm² sowohl in einer Längsrichtung als auch einer Querrichtung davon ist und der Elastizitätsmodul des Basisfilms 100 bis 2.000 kg/mm² sowohl in der Längsrichtung als auch der Querrichtung ist.

12. Magnetisches Aufzeichnungsmedium gemäß Anspruch 2, in dem der spezifische Oberflächenwiderstand der magnetischen Schicht 1 x 10⁴ bis 1 x 10¹² Ohm/Quadrat; der Elastizitätsmodul bei 5 % Dehnung der Magnetschicht 100 bis 2.000 kg/mm² sowohl in einer Laufrichtung als auch einer Querrichtung ist; die Bruchfestigkeit der Magnetschicht 1 bis 30 kg/cm² ist; und die Glasübergangstemperatur der Magnetschicht 50 bis 120°C ist und die Glasübergangstemperatur der nicht-magnetischen Schicht 0 bis 100°C ist.

13. Magnetisches Aufzeichnungsmedium gemäß Anspruch 1, in dem der elastische Verlustmodul der Magnetschicht innerhalb eines Bereichs von 1 x 10⁷ bis 1 x 10⁸ Pa ist und die Verlusttangente der Magnetschicht nicht mehr als 0,2 ist.

14. Magnetisches Aufzeichnungsmedium gemäß Anspruch 1, in dem der Elastizitätsmodul des magnetischen Aufzeichnungsmediums 100 bis 1.500 kg/mm² sowohl in einer Laufrichtung als auch einer Querrichtung ist, die Restdehnung nicht mehr als 0,5 % ist und der thermische Schrumpfungsfaktor bei allen Temperaturen von nicht mehr als 100°C nicht mehr als 1 % ist.

15. Magnetisches Aufzeichnungsmedium gemäß Anspruch 1, in dem Reibungskoeffizienten auf der Seite der Magnetschicht und der gegenüberliegenden Seite für ein Edelstahlblech nicht mehr als 0,5 sind.

16. Magnetisches Aufzeichnungsmedium gemäß Anspruch 2, in dem ein restliches Lösungsmittel, das in der Magnetschicht enthalten ist, nicht mehr als 100 mg/m² ist und ein Hohlraumanteil nicht mehr als 30 Vol.% sowohl in der nicht-magnetischen Schicht als auch der Magnetschicht ist.

## Revendications

1. Support d'enregistrement magnétique comprenant:
un film de base; et
une couche magnétique contenant au moins une poudre magnétique de ferrite hexagonale et un liant et ayant une épaisseur de 10 nm à 200 nm;
dans lequel ladite couche magnétique a une bande d'asservissement, où un signal d'asservissement, pour exécuter une commande de poursuite d'une tête magnétique, est écrit, et une bande de données où des données sont enregistrées;
dans lequel ladite bande d'asservissement est magnétisée dans une direction quelconque parmi des directions longitudinales et ledit signal d'asservissement est écrit sur ladite bande d'asservissement dans une direction de magnétisation qui est inverse à ladite direction de magnétisation de ladite bande d'asservissement; et
dans lequel ladite poudre magnétique de ferrite hexagonale a un diamètre moyen de plaque d'une particule de poudre de 15 nm à 40 nm, une épaisseur moyenne de plaque de 4 nm à 15 nm, et une coercivité Hc de 140 kA/m à 320 kA/m.

2. Support d'enregistrement magnétique selon la revendication 1, dans lequel ladite couche magnétique est pourvue sur ledit film de base à travers une couche non-magnétique contenant au moins une poudre non-magnétique et un liant.

3. Support d'enregistrement magnétique selon la revendication 1 ou 2, dans lequel ladite bande de données n'est pas magnétisée.

4. Support d'enregistrement magnétique selon la revendication 1, dans lequel ladite bande de données n'est pas magnétisée.

5. Support d'enregistrement magnétique selon la revendication 1, dans lequel un produit d'une magnétisation résiduelle et une épaisseur de ladite couche magnétique se trouve entre 5 × 10^{- 10} T.m à 7,5 × 10⁻⁸ T.m.

6. Support d'enregistrement magnétique selon la revendication 1, dans lequel une quantité de magnétisation à saturation de ladite poudre magnétique de ferrite hexagonale se trouve entre 40 A.m²/kg à 100 A.m²/kg.

7. Support d'enregistrement magnétique selon la revendication 1, dans lequel une masse moléculaire moyenne en nombre de résines d'un liant pour une utilisation dans ladite poudre magnétique de ferrite hexagonale atteint 100,000.

8. Support d'enregistrement magnétique selon la revendication 1, dans lequel une rugosité moyenne Ra de ligne centrale dudit film de base ne dépasse pas 0,03 µm et ledit film de base n'a pas de protubérances d'au moins 1 µm.

9. Support d'enregistrement magnétique selon la revendication 1, dans lequel la contrainte dans un allongement de 5% dans une direction longitudinale d'un film de base est 5 kg/mm² à 50 kg/mm².

10. Support d'enregistrement magnétique selon la revendication 1, dans lequel des facteurs de contraction thermique d'une direction longitudinale et d'une direction latérale d'un film de base à 100 degrés Celsius pendant 30 minutes ne dépassent pas 3 pourcent.

11. Support d'enregistrement magnétique selon la revendication 1, dans lequel une résistance à la rupture d'un film de base est 5 kg/mm² à 100 kg/mm² tant dans une direction longitudinale que dans une direction latérale correspondante, et un module élastique dudit film de base est 100 kg/mm² à 2000 kg/mm² tant dans la direction longitudinale que dans la direction latérale.

12. Support d'enregistrement magnétique selon la revendication 2, dans lequel une résistivité de surface de ladite couche magnétique est 1 × 10⁴ ohm/sq à 1 × 10¹² ohm/sq; un module élastique à un allongement de 5 pourcent de ladite couche magnétique est 100 kg/mm² à 2000 kg/mm² tant dans une direction de propagation que dans une direction latérale; une résistance à la rupture de ladite couche magnétique est 1 kg/cm² à 30 kg/cm²; et une température de transition vitreuse de ladite couche magnétique est 50 à 120 degrés Celsius, et une température de transition vitreuse d'une couche non-magnétique est 0 à 100 degrés Celsius.

13. Support d'enregistrement magnétique selon la revendication 1, dans lequel un module élastique de pertes de ladite couche magnétique se trouve dans une gamme de 1 × 10⁷ Pa à 1 × 10⁸ Pa et une tangente de l'angle des pertes de ladite couche magnétique ne dépasse pas 0,2.

14. Support d'enregistrement magnétique selon la revendication 1, dans lequel le module élastique du support d'enregistrement magnétique est 100 kg/mm² à 1500 kg/mm² tant dans une direction de propagation que dans une direction latérale, un allongement résiduel ne dépasse pas 0,5 pourcent, et un facteur de retrait thermique à toutes les températures de pas plus de 100 degrés Celsius ne dépasse pas 1 pourcent.

15. Support d'enregistrement magnétique selon la revendication 1, dans lequel les coefficients de friction de la surface de couche magnétique et de la surface opposée pour une feuille d'acier inoxydable ne dépassent pas 0,5.

16. Support d'enregistrement magnétique selon la revendication 2, dans lequel un solvant résiduel contenu dans ladite couche magnétique ne dépasse pas 100 mg/m² et un indice des vides ne dépasse pas 30 pourcent en volume tant dans la couche non-magnétique que dans ladite couche magnétique.
